# EUROPEAN PATENT APPLICATION

(11) **EP 4 712 235 A1**
(43) Date of publication of application: **18.03.2026**
(21) Application number: 24915429.5
(22) Date of filing: 27.12.2024
(51) Int. Cl.: H01M 50/242, H01M 10/6556, H01M 10/613, H01M 50/262, H01M 50/271

(54) **BATTERY ASSEMBLY AND BATTERY PACK COMPRISING SAME**

(30) Priority: 04.01.2024 KR 20240001300
(71) Applicant: LG Energy Solution, Ltd., Seoul 07335 (KR)
(72) Inventor: KIM, Jae Wook, Daejeon 34122 (KR); LEE, Tae Kyeong, Daejeon 34122 (KR); SHIN, Byeong Ha, Daejeon 34122 (KR)
(74) Representative: BCKIP Part mbB
(86) International application number: PCT/KR2024/021211
(87) International publication number: WO 2025/147017

(57) **Abstract**

Disclosed herein relates to a battery pack including: a pack housing including a first support structure; and a battery assembly accommodated within the pack housing, wherein the battery assembly includes: a cell block comprising a plurality of battery cells stacked in a first direction; a frame including a first side cover and a second side cover spaced apart in the first direction with the cell block interposed therebetween; and a top cover including a central part coupled to the frame to cover the cell block and a first outer part protruding outwardly from the first side cover, wherein the first outer part is fastened to the first support structure, wherein a first buffer space extending in the first direction is provided between the first outer part of the top cover and the first side cover.

## Description

### [Technical Field]

The present disclosure relates to a battery assembly and a battery pack including the same.

This application claims the benefit of Korean Patent Application No. 10-2024-0001300, filed on January 4, 2024, the disclosure of which is incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, as the manufacturing cost per unit capacity of secondary batteries has decreased dramatically due to improved energy density and economies of scale, and as battery electric vehicles (BEVs) have increased their range to be on par with fuel vehicles, the primary use of secondary batteries has shifted from mobile devices to mobility.

As secondary batteries are used in mobility, there is a growing need for secondary battery safety. In the event of a fire or other accident involving a secondary battery used in mobility, the driver's life could be endangered, so research into technologies to improve the safety of secondary batteries is essential.

### [Summary]

### [Technical Problem]

The technical challenge of the present disclosure is to provide a battery assembly and a battery pack including the same.

### [Technical Solution]

To address the above problem, the technical ideas of the present disclosure provides a battery pack including: pack housing comprising a first support structure; and a battery assembly accommodated within the pack housing, wherein the battery assembly includes: a cell block including a plurality of battery cells stacked in a first direction; a frame including a first side cover and a second side cover spaced apart in the first direction with the cell block interposed therebetween; and a top cover including a central part coupled to the frame to cover the cell block and a first outer part protruding outwardly from the first side cover, wherein the first outer part is fastened to the first support structure, wherein a first buffer space extending in the first direction is provided between the first outer part of the top cover and the first side cover.

In exemplary embodiments, the first outer part of the top cover includes: a first side plate spaced apart from the first side cover in the first direction with the first buffer space interposed therebetween; a first extending part extending in the first direction between the first side plate and the central part of the top cover to cover the first buffer space; and at least one first flange connected to the first side plate and fastened to the first support structure.

In exemplary embodiments, the first side plate extends in a second direction perpendicular to the first direction, wherein the first buffer space extends continuously in the second direction between both ends of the first side plate in the second direction.

In exemplary embodiments, a length of the first buffer space in the second direction is greater than a length of the first buffer space in the first direction.

In exemplary embodiments, the at least one first flange includes a plurality of first flanges spaced apart from each other in the second direction along a lower edge of the first side plate.

In exemplary embodiments, the first buffer space communicates with a space provided between a lower part of the first side cover and the first support structure.

In exemplary embodiments, the pack housing further includes a second support structure, the top cover further includes a second outer part protruding outwardly from the second side cover and fastened to the second support structure, and a second buffer space extending in the first direction is provided between the second outer part of the top cover and the second side cover.

In exemplary embodiments, the second outer part of the top cover includes: a second side plate spaced in the first direction from the second side cover with the second buffer space interposed therebetween; a second extending part extending in the first direction between the second side plate and a central part of the top cover to cover the second buffer space; and at least one second flange connected to the second side plate and fastened to the second support structure.

In exemplary embodiments, the second side plate extends in a second direction perpendicular to the first direction, the second buffer space extends continuously in the second direction between both ends of the second side plate in the second direction, a length of the second buffer space in the second direction is greater than a length of the second buffer space in the first direction, and the at least one second flange includes a plurality of second flanges spaced apart from each other in the second direction along a lower edge of the second side plate.

In exemplary embodiments, the frame further includes a bottom cover facing a bottom surface of the cell block, and the bottom cover includes a cooling channel configured to allow a cooling fluid to flow.

In exemplary embodiments, the bottom cover of the frame is spaced from the bottom plate of the pack housing such that a space is formed between the bottom plate of the pack housing and the bottom cover of the frame.

To address the above problem, the technical ideas of the present disclosure provides a battery assembly including: a cell block including a plurality of battery cells stacked in a first direction; a frame including a first side cover and a second side cover spaced apart in the first direction with the cell block interposed therebetween; and a top cover including a central part coupled to the frame to cover the cell block and a first outer part protruding outwardly from the first side cover, the first outer part including a first flange configured to be fastened to an external first support structure, wherein a first buffer space extending in the first direction is provided between the first outer part of the top cover and the first side cover.

In exemplary embodiments, the top cover further includes a second outer part including a second flange protruding outwardly from the second side cover and configured to be fastened to an external second support structure, and a second buffer space extending in the first direction is provided between the second outer part of the top cover and the second side cover.

In exemplary embodiments, the first outer part of the top cover further includes: a first side plate spaced apart from the first side cover in the first direction with the first buffer space interposed therebetween, and connected to the first flange; and a first extending part extending in the first direction between the first side plate and a central part of the top cover to cover the first buffer space, and the second outer part of the top cover further includes: a second side plate spaced apart from the second side cover in the first direction with the second buffer space interposed therebetween, and connected to the second flange; and a second extending part extending in the first direction between the second side plate and a central part of the top cover to cover the second buffer space.

In exemplary embodiments, the top cover is a single integrated structure.

### [Advantageous Effects]

In accordance with exemplary embodiments of the present disclosure, the swelling forces generated by the swelling of the battery cells may be dampened and distributed by a buffer space provided between the frame and the top cover. As the swelling forces are dampened and distributed by the buffer space, the pressure applied to the fastening portion between the top cover and the external support structure can be reduced to prevent damage to the fastening bolts, top cover, and support structure, and to improve the uniformity of the surface pressure acting on the battery cells. As a result, the safety and reliability of the battery assembly and battery packs including the battery assembly may be improved.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a cross-sectional view illustrating a battery pack according to exemplary embodiments of the present disclosure.
FIG. 2 is a perspective view illustrating a battery pack according to exemplary embodiments of the present disclosure.
FIG. 3 is a top view illustrating a battery pack according to exemplary embodiments of the present disclosure.
FIG. 4 is a perspective view illustrating a frame and top cover of a battery assembly according to exemplary embodiments of the present disclosure.
FIG. 5 is a perspective view illustrating a portion of a battery assembly according to exemplary embodiments of the present disclosure.
FIG. 6a is a cross-sectional view of a battery pack with an initial battery assembly.
FIG. 6b is a cross-sectional view illustrating a battery pack with a battery assembly having battery cells deformed by swelling.
FIG. 7 is a schematic diagram illustrating an electric vehicle with a battery pack according to exemplary embodiments of the present disclosure.

### [Best Mode]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

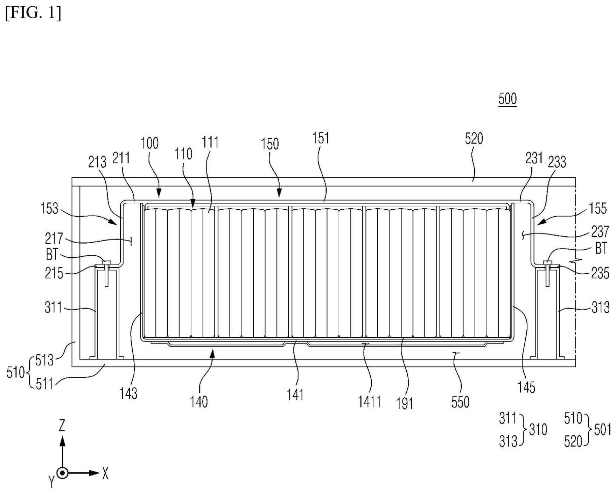

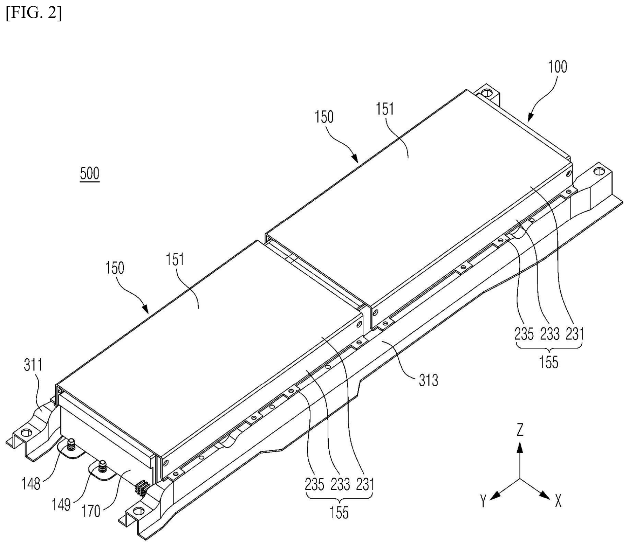

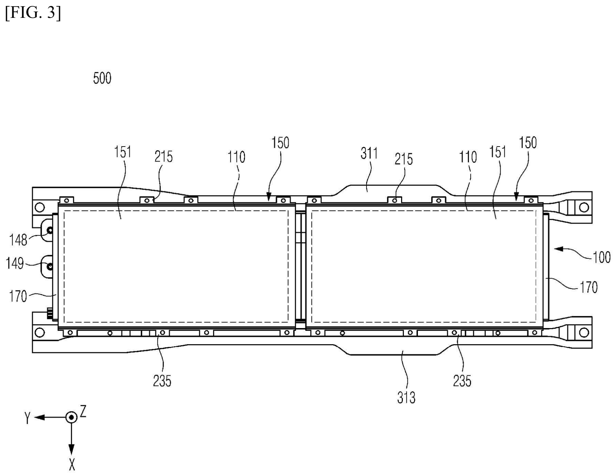

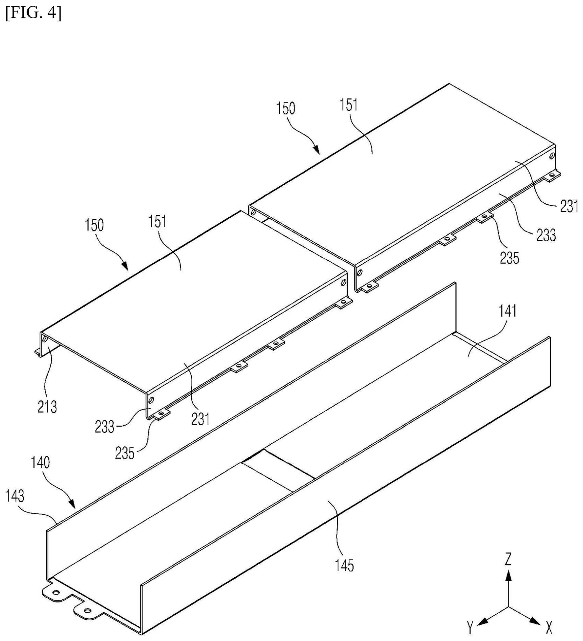

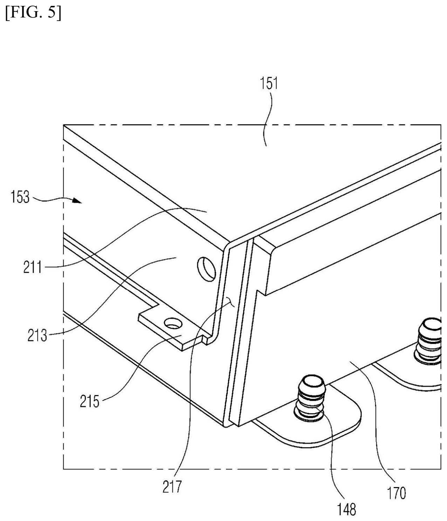

FIG. 1 is a cross-sectional view illustrating a battery pack 500 according to exemplary embodiments of the present disclosure. FIG. 2 is a perspective view illustrating a battery pack 500 according to exemplary embodiments of the present disclosure. FIG. 3 is a top view illustrating a battery pack 500 according to exemplary embodiments of the present disclosure. FIG. 4 is a perspective view illustrating a frame 140 and top cover 150 of a battery assembly 100, according to exemplary embodiments of the present disclosure. FIG. 5 is a perspective view illustrating a portion of a battery assembly 100, according to exemplary embodiments of the present disclosure.

Referring to FIGS. 1 through 5, a battery pack 500 may include a pack housing 501 and a battery assembly 100 mounted in the pack housing 501. The battery pack 500 may include one or more battery assemblies 100 mounted in the pack housing 501. In exemplary embodiments, the battery pack 500 may include two or more battery assemblies 100 arranged in a first horizontal direction (e.g., X-direction).

The pack housing 501 may include a housing body 510 having an accommodation space in which the battery assemblies 100 are accommodated, and a pack lid 520 coupled to the housing body 510 to cover the battery assemblies 100 accommodated in the housing body 510. The accommodation space of the housing body 510 may be defined by a bottom plate 511 that faces the bottom surface of the individual battery assemblies 100, and side walls 513 that extend along an edge of the bottom plate 511 to enclose the battery assemblies 100.

The housing body 510 may include a plurality of support structures 310 that support the battery assembly 100. The plurality of support structures 310 may be disposed on a bottom plate 511 of the housing body 510. The plurality of support structures 310 may be spaced apart from each other in a first horizontal direction (e.g., X direction), and the plurality of support structures 310 may each extend in a second horizontal direction (e.g., Y direction). Individual battery structures may be fastened to and supported by two neighboring support structures 310 in a first horizontal direction (e.g., X direction).

The battery assembly 100 may include a cell block 110, a frame 140, and a top cover 150.

The cell block 110 may include a plurality of battery cells 111. The individual battery cells 111 are the basic unit of a lithium-ion battery, i.e., a secondary battery. Each battery cell 111 may include an electrode assembly, an electrolyte, and a case. The electrode assembly embedded in the case may include a positive electrode, a negative electrode, and a separator interposed between the positive electrode and negative electrode. The electrode assembly may be one of a jelly-roll type and a stack-type, depending on the form of assembly. A jelly-roll type electrode assembly may include a winding structure of a positive electrode, a negative electrode, and a separator interposed between them. A stack-type electrode assembly may include a plurality of positive electrodes and a plurality of negative electrodes stacked in sequence, and a plurality of separators interposed therebetween. The positive electrodes may include a positive electrode current collector and a positive electrode active material. The negative electrodes may include a negative electrode current collector and a negative electrode active material.

The plurality of battery cells 111 may be connected in series and/or in parallel. In one example, the plurality of battery cells 111 may be connected in series with each other. In one example, the plurality of battery cells 111 may be connected in parallel to each other. In one example, when defining a set of two or more battery cells 111 connected in parallel to each other as a bank, one bank of two or more battery cells 111 connected in parallel to each other and another bank of two or more battery cells 111 connected in series with each other may be connected in parallel to each other.

The individual battery cells 111 may correspond to pouch-type battery cells, cylindrical battery cells, or prismatic battery cells. The electrode assembly of a pouch-type battery cell is embedded in a pouch case comprising an aluminum laminated sheet. The electrode assembly of a cylindrical battery cell is embedded in a cylindrical metal can. The electrode assembly of the prismatic battery cell is embedded in a prismatic metal can.

In exemplary embodiments, the plurality of battery cells 111 may correspond to a cell stack stacked in a first horizontal direction (e.g., X-direction). In exemplary embodiments, the plurality of battery cells 111 may each correspond to a pouch-type battery cell having a length in the first horizontal direction (e.g., X direction) less than a length in the second horizontal direction (e.g., Y direction) and a length in the vertical direction (e.g., Z direction), and the plurality of battery cells 111 may be stacked in the first horizontal direction (e.g., X direction).

When viewed in a plane, the cell block 110 may have a rectangular shape in which a length in the first horizontal direction (e.g., the X direction) is less than a length in the second horizontal direction (e.g., the Y direction). In this case, the cell block 110 may have a first side and a second side that are opposite each other in the first horizontal direction (e.g., X direction), a front and rear surfaces that are opposite each other in the second horizontal direction (e.g., Y direction), and an upper surface and a bottom surface that are opposite each other in the third direction (Z direction). The upper surface of the cell block 110 may include the upper surfaces of the plurality of battery cells 111, and the bottom surface of the cell block 110 may include the bottom surfaces of the plurality of battery cells 111.

In exemplary embodiments, the battery assembly 100 may include a single cell block 110. In exemplary embodiments, the battery assembly 100 may include a plurality of cell blocks 110 arranged in a second horizontal direction (e.g., Y-direction). For example, the battery assembly 100 may include two cell blocks 110 (e.g., a first cell block and a second cell block) that are arranged in the second horizontal direction (e.g., Y-direction) and electrically connected to each other.

The battery assembly 100 may include a busbar electrically coupled to the battery cell 111, a busbar frame on which the busbar is mounted, and an end plate 170 for covering the busbar frame. The busbar may be coupled to electrode leads provided at ends along a second horizontal direction (e.g., Y-direction) of the battery cell 111. For example, the busbars may be welded to the electrode leads of the battery cell 111. For example, the individual busbars may be connected to electrode leads connected to different battery cells 111 belonging to the cell block 110 and may be inter-busbars for electrically connecting different battery cells 111. For example, the individual busbars may be terminal-busbars for electrically connecting the battery assembly 100 to other external electrical devices.

The frame 140 may accommodate the cell block 110. The frame 140 may include a bottom cover 141 that supports the cell block 110, and first side covers 143 and second side covers 145 spaced apart in a first horizontal direction (e.g., the X direction) with the cell block 110 interposed therebetween. The frame 140 may have a U-shaped cross-section. The accommodation space of the frame 140 may extend in a second horizontal direction (e.g., Y direction).

The bottom cover 141 may support the cell block 110. The bottom cover 141 may face a bottom surface of the cell block 110 and may extend along the bottom surface of the cell block 110 to cover the bottom surface of the cell block 110. The bottom cover 141 may have a generally flat plate shape extending in a first horizontal direction (e.g., X direction) and a second horizontal direction (e.g., Y direction). The cell block 110 may be attached to the bottom cover 141 via a thermally conductive adhesive layer 191. The thermally conductive adhesive layer 191 may be interposed between the bottom surface of the cell block 110 and the bottom cover 141, and may thermally and physically couple the cell block 110 to the bottom cover 141. For example, the thermally conductive adhesive layer 191 may include a thermal interface material (TIM) and/or a thermal resin.

The bottom cover 141 may have cooling channels 1411 configured for cooling fluid to flow through, and may be configured to cool the cell block 110. The bottom cover 141 may be referred to as a cooling plate. One side of the bottom cover 141 may be connected to an inlet pipe 148 through which cooling fluid is introduced and an outlet pipe 149 through which cooling fluid is discharged. The bottom cover 141 may be thermally coupled to the cell block 110 via a thermally conductive adhesive layer 191, and may be configured to cool the cell block 110. Cooling fluid supplied from outside of the battery assembly 100 may enter the cooling channel 1411 via the inlet pipe 148, flow along the cooling channel 1411, and subsequently exit to the outside via the outlet pipe 149. While the cooling fluid flows along the cooling channel 1411, cooling may be performed on the cell block 110 and the battery assembly 100. For example, the bottom cover 141 may be made of two plates bonded together, and the cooling channel 1411 may include a space defined between the two plates.

The first side cover 143 may face the first side of the cell block 110, and may extend along the first side of the cell block 110 to cover the first side of the cell block 110. The first side cover 143 may contact and support the first side of the cell block 110. The first side cover 143 may have a generally flat plate shape extending in a second horizontal direction (e.g., Y-direction) and a vertical direction (e.g., Z-direction).

The second side cover 145 may face the second side of the cell block 110, and may extend along the second side of the cell block 110 to cover the second side of the cell block 110. The second side cover 145 may contact and support the second side of the cell block 110. The second side cover 145 may have a generally flat plate shape extending in a second horizontal direction (e.g., Y-direction) and a vertical direction (e.g., Z-direction). The first side cover 143 and the second side cover 145 may extend parallel to each other.

The top cover 150 may be coupled to the frame 140 to cover the upper surface of the cell block 110. In exemplary embodiments, the top cover 150 may be coupled to each of the upper edge of the first side cover 143 and the upper edges of the second side cover 145 via welding. In exemplary embodiments, a metal bonding layer may be interposed between the first side cover 143 and the top cover 150 and between the second side cover 145 and the top cover 150, respectively.

The top cover 150 may be fastened to the pack housing 501. The top cover 150 may be fastened to a first support structure 311 and a second support structure 313 spaced apart in a first horizontal direction (e.g., the X-direction) with the cell block 110 interposed therebetween. With the top cover 150 fastened to the first support structure 311 and the second support structure 313, the battery assembly 100 may be mounted to the pack housing 501 in a side-mounted manner.

The top cover 150 may include a central part 151 covering the cell block 110, a first outer part 153 protruding in a first horizontal direction (e.g., X-direction) from the first side cover 143, and a second outer part 155 protruding in a second horizontal direction (e.g., X-direction) from the second side cover 145. The top cover 150 may be a single piece or a single integrated structure.

The central part 151 of the top cover 150 may have a generally flat plate shape extending in a first horizontal direction (e.g., X direction) and a second horizontal direction (e.g., Y direction). The central part 151 of the top cover 150 may be coupled to an upper edge of the first side cover 143 and an upper edge of the second side cover 145.

A first outer part 153 of the top cover 150 may protrude from the first side cover 143 in an outward direction away from the first side cover 143 and may be fastened to the first support structure 311. The top cover 150 may include a first side plate 213 spaced apart from the first side cover 143 in a first horizontal direction (e.g., an X direction), a first extending part 211 extending between the first side plate 213 and a central part 151 of the top cover 150, and at least one first flange 215 fastened to the first support structure 311.

The first side plate 213 may have a flat plate shape extending generally in a second horizontal direction (e.g., Y-direction) and a vertical direction (e.g., Z-direction), and may be generally parallel to the first side cover 143.

The first extending part 211 may extend in a first horizontal direction (e.g., X direction) between an upper edge of the first side plate 213 and an upper edge of the first side cover 143. The first extending part 211 may have a generally flat plate shape extending in a first horizontal direction (e.g., X direction) and a second horizontal direction (e.g., Y direction).

The first flange 215 may extend outwardly from the lower edge of the first side plate 213. The first flange 215 may have a fastening hole into which the mating bolt BT is inserted. By inserting and fastening the fastening bolts BT into the fastening holes in the first flange 215 aligned in a vertical direction (e.g., the Z direction) and the fastening holes in the first support structure 311, the first outer part 153 of the top cover 150 may be fastened to the first support structure 311. The first outer part 153 of the top cover 150 may include a plurality of first flanges 215, and the plurality of first flanges 215 may be spaced apart from each other in a second horizontal direction (e.g., Y-direction) along the lower edge of the first side plate 213.

The first outer part 153 of the top cover 150 and the first side cover 143 may together define a first buffer space 217. The first buffer space 217 can mitigate swelling forces acting in a first horizontal direction (e.g., the X-direction) due to thickness variations caused by swelling of the battery cells 111. A first buffer space 217 may be provided between the first side plate 213 and the first side cover 143 of the first outer part 153, and the first extending part 211 may cover the first buffer space 217. The first buffer space 217 may extend continuously in a second horizontal direction (e.g., Y-direction) between both ends of the first side plate 213 in the second horizontal direction (e.g., Y-direction). Both ends of the first buffer space 217 in the second horizontal direction (e.g., Y-direction) may be exposed to the exterior of the battery assembly 100. A length of the first buffer space 217 in a vertical direction (e.g., Z-direction) may be the same as a length of the first side plate 213 in a vertical direction (e.g., Z-direction). An upper part of the first buffer space 217 may be covered by the first extending part 211, but a lower part of the first buffer space 217 may not be covered by any other structure. A space extending in a first horizontal direction (e.g., X direction) and a second horizontal direction (e.g., Y direction) is provided between the lower part of the first side cover 143 and the first support structure 311, and the first buffer space 217 may communicate in a vertical direction (e.g., Z direction) with the space provided between the lower part of the first side cover 143 and the first support structure 311.

The length of the first buffer space 217 in the second horizontal direction (e.g., Y direction) may be greater than the length of the first buffer space 217 in the first horizontal direction (e.g., X direction). The length of the first buffer space 217 in the first horizontal direction (e.g., X direction) may range from a few to tens mm. In exemplary embodiments, the length of the first buffer space 217 of the first horizontal direction (e.g., X-direction) may be between 1 mm and 10 mm, between 2 mm and 9 mm, between 3 mm and 8 mm, or between 4 mm and 7 mm. The length of the first buffer space 217 in the second horizontal direction (e.g., Y direction) may be similar to the length of the cell block 110 in the second horizontal direction (e.g., Y direction). The length of the first buffer space 217 in the second horizontal direction (e.g., Y direction) may be between about 80% and about 120% of the length of the cell block 110 in the second horizontal direction (e.g., Y direction).

A second outer part 155 of the top cover 150 may protrude from the second side cover 145 in an outward direction away from the second side cover 145 and may be fastened to the second support structure 313. The top cover 150 may include a second side plate 233 spaced from the second side cover 145 in a first horizontal direction (e.g., X direction), a second extending part 231 extending between the second side plate 233 and the central part 151 of the top cover 150, and at least one second flange 235 fastened to the second support structure 313. The second side plate 233 may have a flat plate shape extending generally in a second horizontal direction (e.g., Y-direction) and a vertical direction (e.g., Z-direction), and may be generally parallel to the second side cover 145.

The second extending part 231 may extend in a first horizontal direction (e.g., X direction) between an upper edge of the second side plate 233 and an upper edge of the second side cover 145. The second extending part 231 may have a generally flat plate shape extending in the first horizontal direction (e.g., X direction) and the second horizontal direction (e.g., Y direction).

The second flange 235 may extend outwardly from the lower edge of the second side plate 233. The second flange 235 may have a fastening hole into which the fastening bolt BT is inserted. By inserting and fastening the fastening bolts BT into the fastening holes of the second flange 235 aligned in a vertical direction (e.g., the Z direction) and the fastening holes of the second support structure 313, the second outer part 155 of the top cover 150 may be fastened to the second support structure 313. The second outer part 155 of the top cover 150 may include a plurality of second flanges 235, and the plurality of second flanges 235 may be spaced apart from each other in a second horizontal direction (e.g., Y direction) along a lower edge of the second side plate 233.

The second outer part 155 of the top cover 150 and the second side cover 145 may together define a second buffer space 237. The second buffer space 237 can mitigate swelling forces acting in a first horizontal direction (e.g., the X direction) due to thickness variations caused by swelling of the battery cells 111. The second buffer space 237 may be provided between the second side plate 233 and the second side cover 145 of the second outer part 155, and the second extending part 231 may cover the second buffer space 237. The second buffer space 237 may extend continuously in a second horizontal direction (e.g., Y direction) between both ends of the second side plate 233 in a second horizontal direction (e.g., Y direction). A length of the second buffer space 237 in a vertical direction (e.g., Z direction) may be equal to a length of the second side plate 233 in a vertical direction (e.g., Z direction). An upper part of the second buffer space 237 may be covered by the second extending part 231, but a lower part of the second buffer space 237 may not be covered by any other structure. A space extending in a first horizontal direction (e.g., X direction) and a second horizontal direction (e.g., Y direction) is provided between the lower part of the second side cover 145 and the second support structure 313, and the second buffer space 237 may communicate in a vertical direction (e.g., Z direction) with the space provided between the lower part of the second side cover 145 and the second support structure 313.

The length of the second buffer space 237 in the second horizontal direction (e.g., Y direction) may be greater than the length of the second buffer space 237 in the first horizontal direction (e.g., X direction). The length of the second buffer space 237 in the first horizontal direction (e.g., X direction) may range from a few to tens of millimeters, and may be substantially the same or similar to the length of the first buffer space 217 in the first horizontal direction (e.g., X direction). A length of the second buffer space 237 in a second horizontal direction (e.g., Y direction) may be similar to a length of the cell block 110 in a second horizontal direction (e.g., Y direction). The length of the second buffer space 237 in the second horizontal direction (e.g., Y direction) may be between about 80% and about 120% of the length of the cell block 110 in the second horizontal direction (e.g., Y-direction).

In exemplary embodiments, the frame 140 can accommodate two cell blocks 110, and two top covers 150 can be coupled to the frame 140 to cover different cell blocks 110. The two cell blocks 110 may each be attached to the bottom cover 141 by a thermally conductive adhesive layer 191, and may be spaced apart from each other in a second horizontal direction (e.g., Y-direction). The two top covers 150 may be spaced apart from each other in the second horizontal direction (e.g., Y-direction). For example, when a first cell block and a second cell block spaced apart in the second horizontal direction (e.g., Y-direction) are disposed in the accommodation space of the frame 140, the battery assembly 100 may include a first top cover coupled to the frame 140 to cover the first cell block and a second top cover coupled to the frame 140 to cover the second cell block.

When the battery pack 500 is mounted in a vehicle, a cabin room where passengers ride may be located at the upper side of the pack leads 520, and downstream of the housing body 510 may be the ground on which the vehicle is traveling.

The battery assembly 100 is supported on a plurality of support structures 310 provided on the bottom plate 511 of the housing body 510 in a side-mounted manner, and a free volume 550 may be provided between the bottom plate 511 of the housing body 510 and the bottom cover 141 of the battery assembly 100. The free volume 550 is a space formed by the bottom cover 141 of the battery assembly 100 spaced apart from the bottom plate 511 of the housing body 510, and may be referred to simply as a space. Through the free volume 550, gases and flames generated in a thermal runaway situation may be transported. That is, the free volume 550 becomes a venting passageway through which hot gases and flames may be transported. Furthermore, in the event of a strong impact caused by a foreign object being thrown under the vehicle in a hard ground driving situation such as a dirt road, the free volume 550 can absorb the impact. Thus, the plurality of battery assemblies 100 may be prevented from being damaged by the impact. In the event that the housing body 510 deforms toward the battery assembly 100 due to an impact from the underside of the vehicle, the free volume 550 may be utilized as a space to allow some deformation of the housing body 510.

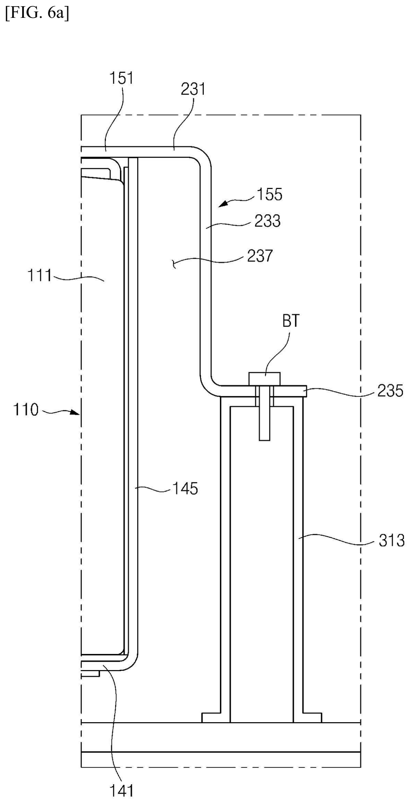

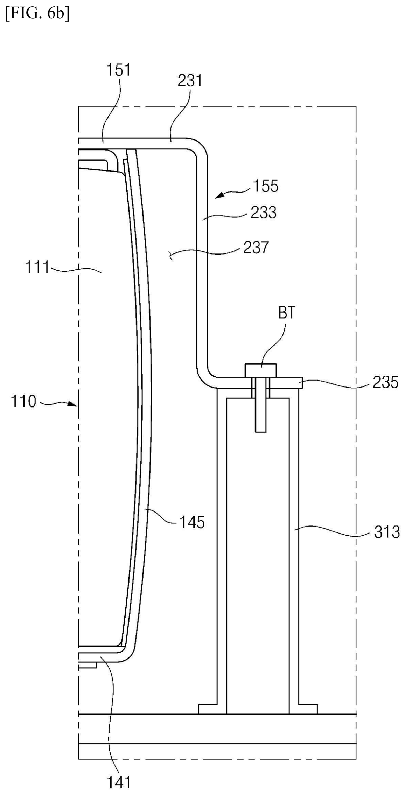

In a battery pack according to a comparative example, when the thickness of the battery cells changes due to swelling of the battery cells, the total thickness along the first horizontal direction (e.g., the X-direction) of the cell block increases, and strong pressures may be applied to the fastening portions of the mounting structure of the battery assembly and the support structure of the pack housing. The pressure may cause damage to the fastening bolts, the mounting structure of the battery assembly, and/or the support structure of the pack housing. FIG. 6a is a cross-sectional view illustrating a battery pack 500 with an initial battery assembly 100. FIG. 6b is a cross-sectional view illustrating a battery pack 500 with a battery assembly 100 having battery cells 111 that have been deformed by swelling.

Referring to FIGS. 6a and 6b in conjunction with FIGS. 1 to 5, the swelling force generated by the swelling of the battery cells 111 acts primarily in a first horizontal direction (e.g., the X direction), which is the stacking direction of the battery cells 111. In exemplary embodiments, the swelling forces generated by the swelling of the battery cells 111 can be dampened and distributed by the buffer spaces (i.e., the first buffer space 217 and the second buffer space 237) provided between the frame 140 and the top cover 150. As the swelling force is dampened and distributed by the buffer spaces, the pressure applied to the fastening area between the top cover 150 and the support structure 310 can be reduced to prevent damage to the fastening bolts BT, the top cover 150, and the support structure 310, and to improve the uniformity of the surface pressure acting on the battery cells 111. Accordingly, the safety and reliability of the battery assembly 100 and the battery pack 500 including it may be improved.

### (Second embodiment)

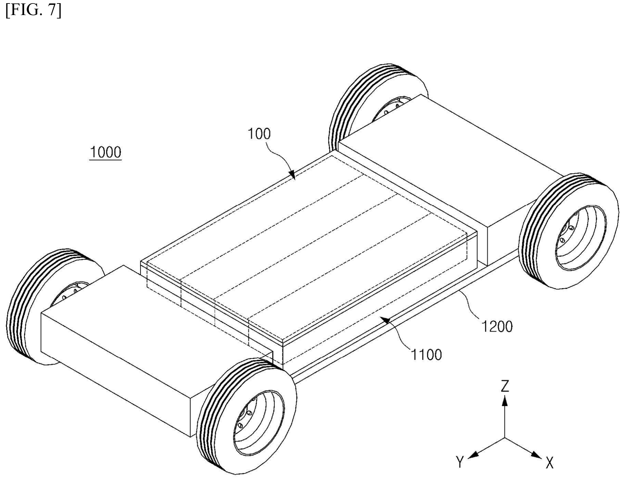

FIG. 7 is a schematic diagram illustrating an electric vehicle 1000 equipped with a battery pack 1100, according to exemplary embodiments of the present disclosure.

In FIG. 7, for simplicity of illustration, only a vehicle frame 1200 forming the lower skeleton of a vehicle is shown, and a battery pack 1100 and tires mounted to the vehicle frame 1200. The battery pack 1100 may include the battery pack 500 described with reference to FIGS. 1 through 5. In exemplary embodiments, within the battery pack 1100, a free volume 550 is provided between the battery assembly 100 and the pack housing 501 so that the pack housing 501 can prevent damage to the battery assembly 100 upon deformation. Furthermore, embodiments of the present disclosure can improve the safety of the battery pack 500 and the electric vehicle 1000 comprising it, as external forces caused by swelling of the battery cells 111 can be dampened and distributed.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery pack comprising:
a pack housing comprising a first support structure; and
a battery assembly accommodated in the pack housing, wherein
the battery assembly comprises:
a cell block comprising a plurality of battery cells stacked in a first direction;
a frame comprising a first side cover and a second side cover spaced apart in the first direction with the cell block interposed therebetween; and
a top cover comprising a central part coupled to the frame to cover the cell block and a first outer part protruding outwardly from the first side cover, wherein the first outer part is fastened to the first support structure, and
a first buffer space extending in the first direction is provided between the first outer part of the top cover and the first side cover.

2. The battery pack of claim 1, wherein
the first outer part of the top cover comprises:
a first side plate spaced apart from the first side cover in the first direction with the first buffer space interposed therebetween;
a first extending part extending in the first direction between the first side plate and the central part of the top cover to cover the first buffer space; and
at least one first flange connected to the first side plate and fastened to the first support structure.

3. The battery pack of claim 2, wherein
the first side plate extends in a second direction perpendicular to the first direction, wherein
the first buffer space extends continuously in the second direction between both ends of the first side plate in the second direction.

4. The battery pack of claim 3, wherein
a length of the first buffer space in the second direction is greater than a length of the first buffer space in the first direction.

5. The battery pack of claim 3, wherein
the at least one first flange comprises a plurality of first flanges spaced apart from each other in the second direction along a lower edge of the first side plate.

6. The battery pack of claim 1, wherein
the first buffer space communicates with a space provided between a lower part of the first side cover and the first support structure.

7. The battery pack of claim 1, wherein
the pack housing further comprises a second support structure,
the top cover further comprises a second outer part protruding outwardly from the second side cover and fastened to the second support structure, and
a second buffer space extending in the first direction is provided between the second outer part of the top cover and the second side cover.

8. The battery pack of claim 7, wherein
the second outer part of the top cover comprises:
a second side plate spaced in the first direction from the second side cover with the second buffer space interposed therebetween;
a second extending part extending in the first direction between the second side plate and a central part of the top cover to cover the second buffer space; and
at least one second flange connected to the second side plate and fastened to the second support structure.

9. The battery pack of claim 8, wherein
the second side plate extends in a second direction perpendicular to the first direction,
the second buffer space extends continuously in the second direction between both ends of the second side plate in the second direction,
a length of the second buffer space in the second direction is greater than a length of the second buffer space in the first direction, and
the at least one second flange comprises a plurality of second flanges spaced apart from each other in the second direction along a lower edge of the second side plate.

10. The battery pack of claim 1, wherein
the frame further comprises a bottom cover facing a bottom surface of the cell block, and
the bottom cover comprises a cooling channel configured to allow a cooling fluid to flow.

11. The battery pack of claim 10, wherein
the bottom cover of the frame is spaced from a bottom plate of the pack housing such that a space is formed between the bottom plate of the pack housing and the bottom cover of the frame.

12. A battery assembly comprising:
a cell block comprising a plurality of battery cells stacked in a first direction;
a frame comprising a first side cover and a second side cover spaced apart in the first direction with the cell block interposed therebetween; and
a top cover comprising a central part coupled to the frame to cover the cell block and a first outer part protruding outwardly from the first side cover, wherein the first outer part comprising a first flange configured to be fastened to an external first support structure, wherein
a first buffer space extending in the first direction is provided between the first outer part of the top cover and the first side cover.

13. The battery assembly of claim 12, wherein
the top cover further comprises a second outer part comprising a second flange protruding outwardly from the second side cover and configured to be fastened to an external second support structure, and
a second buffer space extending in the first direction is provided between the second outer part of the top cover and the second side cover.

14. The battery assembly of claim 13, wherein
the first outer part of the top cover further comprises:
a first side plate spaced apart from the first side cover in the first direction with the first buffer space interposed therebetween, and connected to the first flange; and
a first extending part extending in the first direction between the first side plate and a central part of the top cover to cover the first buffer space, and
the second outer part of the top cover further comprises:
a second side plate spaced apart from the second side cover in the first direction with the second buffer space interposed therebetween, and connected to the second flange; and
a second extending part extending in the first direction between the second side plate and a central part of the top cover to cover the second buffer space.

15. The battery assembly of claim 14, wherein
the top cover is a single integrated structure.
